# EUROPÄISCHE PATENTANMELDUNG

(11) **EP 0 600 114 A1**
(43) Veröffentlichungstag der Anmeldung: **08.06.1994**
(21) Anmeldenummer: 92120423.6
(22) Anmeldetag: 30.11.1992
(51) Int. Cl.: H04L 12/56, G06F 15/16

(54) **Verbindungsnetzwerk für den Informationsaustausch zwischen verschiedenen Steuereinheiten**

(71) Anmelder: Siemens Nixdorf Informationssysteme Aktiengesellschaft, D-33102 Paderborn (DE)
(72) Erfinder: Sapotta, Karl, Dr.rer.nat., W-8000 München 90 (DE); Maximilien, Eric, F-92310 Sevres (FR)
(74) Vertreter: Fuchs, Franz-Josef, Dr.-Ing.

(57) **Zusammenfassung**

Das Verbindungsnetzwerk (VN) besteht aus mehreren Verbindungsknoten (VK...), an die jeweils eine Datenverwaltungssteuereinheit (DE) und weitere Steuereinheiten (SE, GE) über Schnittstellen angeschlossen sind. Jeder Knoten ist mit jedem anderen über in beide Richtungen betreibbare Verbindungsleitungen (LK...) verbunden. Jeder Informationsaustausch umfaßt eine Steuerinformation und eine Antwortinformation, die jeweils über alle Verbindungsleitungen weitergeleitet wird. Gleiches gilt für Anforderungs- und Freigabesignale für einen Informationsaustausch, so daß jeder Verbindungsknoten die Funktion des Masterknotens für die Anforderungs- und Freigabesteuerung übernehmen kann. Je Richtung einer Verbindungsleitung nur eine zusätzliche Steuerleitung neben den Datenleitungen für die Weiterleitung des Anforderungssignales (REQ) bzw. des Freigabesignales (GRA). Hohe Redundanz und Ausfallsicherheit mit der Möglichkeit zur Änderung der Systemkonfiguration.

## Beschreibung

Die Erfindung betrifft ein Verbindungsnetzwerk entsprechend dem Oberbegriff des Patentanspruches 1.

Verbindungsnetzwerke zum Informationsaustausch zwischen verschiedenen Einheiten, Stationen oder Teilnehmern eines Systems sind bereits in vielfältiger Form und für die verschiedensten Anwendungen allgemein bekannt. Abhängig von der jeweiligen Verbindungsstruktur unterscheidet man zwischen vermaschten Netzen mit oder ohne Vermittlungsfunktion in den einzelnen Knoten, Sternnetzen, Ringnetzen oder Bussystemen, die auch in beliebiger Weise miteinander gekoppelt sein können - man siehe z.B. rtp Regelungstechni-Praxis 23 (1981), Heft 10, Seiten S25 bis S28. Allen Verbindungsnetzen ist dabei gemein, daß über als gemeinsame Übertragungskanäle genutzte Verbindungsleitungen mehrere Teilnehmer nicht gleichzeitig Informationen austauschen können. Die Wünsche zum Informationsaustausch müssen daher koordiniert werden. Letzteres gilt insbesondere für Ring- und Bussysteme, bei denen alle Teilnehmer an dasselbe Leitungssystem angeschlossen sind, und erfordert gesonderte Maßnahmen zur Steuerung der Erfassung von Übertragungswünschen und der Vergabe von Übertragungsrechten an die einzelnen Teilnehmer.

Aufgabe der Erfindung ist es, für mehrere unterschiedliche Teilnehmer an jeweils einem Ort ein Verbindungsnetzwerk zu schaffen, über das die Teilnehmer an verschiedenen Orten in einfacher Weise Informationen austauschen können, wobei an jedem Ort ein Teilnehmer über einen Grunddatenbestand verfügt, der jeweils für alle Orte einheitlich und einheitlich fortzuschreiben ist. Abgesehen von der damit verbundenen Redundanz soll das neue Verbindungsnetzwerk einen hohen Grad an Ausfallsicherheit aufweisen und im Rahmen eines vorgegebenen maximalen Ausbaues einfach konfigurierbar und im Störungsfall rekonfigurierbar sein.

Diese Aufgabe wird durch die kennzeichnenden Merkmale des Patentanspruchs 1 gelöst. Grundlage des neuen Verbindungsnetzwerkes ist danach ein voll vermaschtes Knotennetzwerk, bei dem jeder Knoten mit jedem anderen Verbindungsknoten in Hin- und Rückrichtung verbunden ist und bei dem die jeweils von einem Knoten ausgesandten Informationen jeweils von allen anderen Verbindungsknoten empfangen werden. Demzufolge erreicht auch jedes von einem Verbindungsknoten ausgesandtes Anforderungssignal bzw. Freigabesignal jeden anderen Verbindungsknoten, so daß bei gleichartigem Aufbau aller Verbindungsknoten jeder die Funktion des Masterknotens übernehmen kann, der alle Übertragungswünsche im System erfaßt und die Berechtigung zum Informationsaustausch erteilt. Der Leitungsaufwand für die Berechtigungssteuerung ist daher nicht viel größer als bei einem Bussystem mit einem zentralen Busmaster, wenn je Verbindungsknoten von mehreren gleichzeitigen Anforderungen jeweils nur eine ausgewählte zum Masterknoten weitergeleitet wird. Am Masterknoten werden nämlich ankommend nur Anforderungssignale von anderen Verbindungsknoten empfangen und abgehend nur Freigabesignale ausgesendet, während an jedem anderen Verbindungsknoten abgehend nur die Anforderungssignale weitergeleitet werden und ankommend von einem der Verbindungsknoten, nämlich dem Masterknoten, nur ein einziges Signal, nämlich ein Freigabesignal, empfangen wird, da der Masterknoten selbst kein Anforderungssignal aussendet. Für die Berechtigungssteuerung ist also für jede Verbindungsleitung zu einem anderen Verbindungsknoten nur eine zusätzliche Signalleitung je Richtung erforderlich.

Andererseits wird jeder Informationsaustausch mit einer vom Empfänger der Steuerinformation ebenfalls an alle anderen Verbindungsknoten ausgesandten Antwortinformation abgeschlossen, so daß nicht nur die den Informationsaustausch veranlassende Steuereinheit die Möglichkeit hat, die erfolgreiche Durchführung zu kontrollieren, sondern der Masterknoten ebenfalls in einfacher Weise erkennen kann, daß der jeweils freigegebene Informationsaustausch beendet ist, und daher eine weitere vorliegende Anforderung auswählen kann. Bei Ausfall eines als Masterknoten arbeitenden Verbindungsknotens kann daher ohne weiteres einer der anderen Verbindungsknoten die Funktion des Masterknotens übernehmen, so daß das System im übrigen Teil funktionsfähig bleibt. Die wahlweise mögliche Festlegung des Masterknotens macht das System zugleich vielfältig konfigurierbar und rekonfigurierbar.

Weiterbildungen der Erfindung ergeben sich aus den Unteransprüchen. Diese beziehen sich auf die Parallelarbeit an den Verbindungsknoten infolge von zusätzlichen Kurzschlußwegen und auf den Aufbau der Steuerungen in den einzelnen Verbindungsknoten in Verbindung mit verschiedenen Steuerungs- und Betriebsmöglichkeiten für den Informationsaustausch.

Einzelheiten der Erfindung seien nachfolgend anhand eines in der Zeichnung dargestellten Ausführungsbeispiels näher erläutert. Im einzelnen zeigen
Figur 1 ein Übersichtsschaltbild eines Verbindungsnetzwerks gemäß der Erfindung,
Figur 2 ein Blockschaltbild einer Schnittstelle für den Anschluß einer Steuereinheit an einen der Verbindungsknoten des Verbindungsnetzwerks von Figur 1,
Figur 3 ein Blockschaltbild eines Verbindungsknotens des Verbindungsnetzwerks von Figur 1 mit den Schnittstellenanschlüssen für die jeweiligen Steuereinheiten und Verbindungsleitungen
Figur 4 ein Blockschaltbild der Anforderungs- und Freigabesteuerung an jedem Verbindungsknoten und
Figur 5A bis 5C Flußdiagramme zur Erläuterung des Steuerungsablaufes für den Informationsaustausch über das Verbindungsnetzwerk.

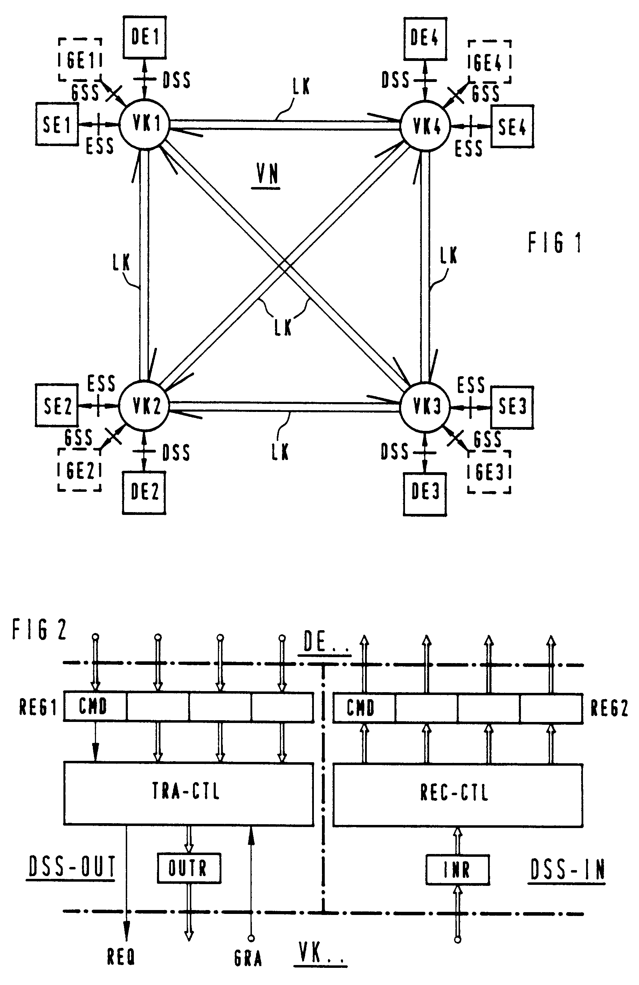

Figur 1 zeigt ein aus beispeilsweise vier Verbindungsknoten VK1 bis VK4 bestehendes Verbindungsnetzwerk VN. An jeden Verbindungsknoten VK... können mehrere Steuereinheiten DE..., SE... und GE... unterschiedlichen Typs über Schnittstellen DSS bzw. ESS bzw. GSS angeschlossen sein, von denen beispielsweise die Steuereinheiten DE als Datenverwaltungssteuereinheiten jeweils den einheitlichen Grunddatenbestand verwalten, aus dem die weiteren Steuereinheiten SE und GE jederzeit gewünschte Daten abrufen können. Alle Verbindungsknoten VK... des Verbindungsnetzwerkes VN sind mit jedem anderen Verbindungsknoten über in Hin- und Rückrichtung betreibbare bidirektionale Verbindungsleitungen LK... miteinander verbunden, so daß von einem jedem Verbindungsknoten ausgesandte Informationen parallel zu allen anderen Verbindungsknoten VK... gelangen können, ohne daß in den einzelnen Verbindungsknoten eine Vermittlungsfunktion erforderlich ist, um einen vorgegebenen Verbindungsknoten zu erreichen. Andererseits können Aufträge, die sich an Steuereinheiten an allen Verbindungsknoten richten, z.B. um Daten im Grunddatenbestand aller Datenverwaltungssteuereinheiten DE zu ändern, parallel vergeben und ausgeführt werden.

Die Verwendung eines Maschennetzwerkes erfordert zwar einen größeren Aufwand an Verbindungsleitungen. Um dennoch den Aufwand in Grenzen zu halten, wird die Anzahl der Signalleitungen je Richtung zweckmäßig begrenzt, z.B. auf insgesamt neun Signalleitungen entsprechend der parallelen Übertragung jeweils eines paritätsgesicherten Datenbytes und serieller Übertragung aufeinanderfolgender Datenbytes, wobei neben der einen Signalleitung für die Übertragung des Anforderungs- bzw. des Freigabesignals acht Signalleitungen für den Dateninformationsaustausch entsprechend einer Bytebreite zur Verfügung stehen, von denen eine dem jeweiligen Paritätsbit vorbehalten ist.

Wie bei Bus- oder Ringsystemen üblich, werden wesentliche Steuerinformationen im jeweils ersten Byte übertragen, damit ohne weitere Vermittlungsfunktion ein Empfänger seine Zuständigkeit erkennen kann und weiterhin erkennbar ist, welche Funktion mit den empfangenen Daten verbunden ist. Im vorliegenden Fall werden beispielsweise im jeweils ersten Byte einheitlich Steuerbits verwendet, die erkennen lassen, ob es sich um eine Steuerinformation oder um eine Antwortinformation handelt, damit der Masterknoten das Ende eines Informationsaustausches in einfacher Weise feststellen kann. Zweckmäßig ist es außerdem, die im ersten Byte mitgeführten Steuerbits so zu wählen, daß der Übergang vom informationslosen Leitungszustand in den informationsbehafteten am jeweiligen Empfänger unmittelbar erkannt werden kann.

Beim Ausführungsbeispiel werden beispielsweise drei Steuerbits CMD0...2 verwendet, wobei die Bitkombination 11x eine Antwortinformation kennzeichnet, und das dritte Steuerbit x anzeigt, ob die vom antwortenden Empfänger aufgrund der erhaltenen Steuerinformation durchgeführte Bearbeitung einwandfrei durchgeführt wurde oder nicht.

Gleichzeitig kennzeichnen diese Steuerbits entsprechend der Bedingung DMD0 v DMD1 v CMD2=1 den Beginn einer Datenübertragung.

Den grundsätzlichen Aufbau der Schnittstellen ...SS für den Anschluß der einzelnen Steuereinheiten an die Verbindungsknoten VK... zeigt Figur 2. Von der jeweiligen Steuereinheit, im vorliegenden Fall die Datenverwaltungssteuereinheit DE..., werden die Daten für die jeweilige Steuer- oder Antwortinformation zunächst z.B. parallel in entsprechende Bereitstellungsregister REG1 als Zwischenpuffer übernommen, wobei die Daten für die Steuerinformation und die Antwortinformation in getrennten Registern gespeichert werden, was in Figur 2 nicht gesondert dargestellt ist. Mit diesen Registern ist eine Übertragungssteuerung TRA-CTL gekoppelt, die jeweils nach Bereitstellung einer Steuerinformation ein Anforderungssignal REQ auslöst, um Zugang zum Verbindungsnetzwerk zu erhalten. Wird daraufhin vom Masterknoten das Freigabesignal GRA erhalten, bildet die Übertragungssteuerung TRA-CTL aus der bereitgestellten Steuerinformation die aufeinanderfolgend zu übertragenden Datenbytes und schaltet sie nacheinander zum Ausgangsregister OUTR durch. Die Weiterleitung einer Antwortinformation erfolgt dagegen unmittelbar nach ihrer Bereitstellung unabhängig von einem Freigabesignal vom Masterknoten.

Andererseits werden vom Verbindungsknoten ankommende Steuer- oder Antwortinformationen zunächst von einem Empfangsregister INR übernommen und von einer Empfangssteuerung REC-CTL an die entsprechenden Bereitstellungsregister REG2 zur Weiterleitung an die angeschlossene Steuereinheit DE... übertragen. Demgegenüber weisen die Schnittstellen ESS und GSS für die weiteren Steuereinheiten SE und GE am Verbindungsknoten VK jeweils nur einen Registersatz auf, nämlich abgehend für die Steuerinformation und ankommend für die Antwortinformation.

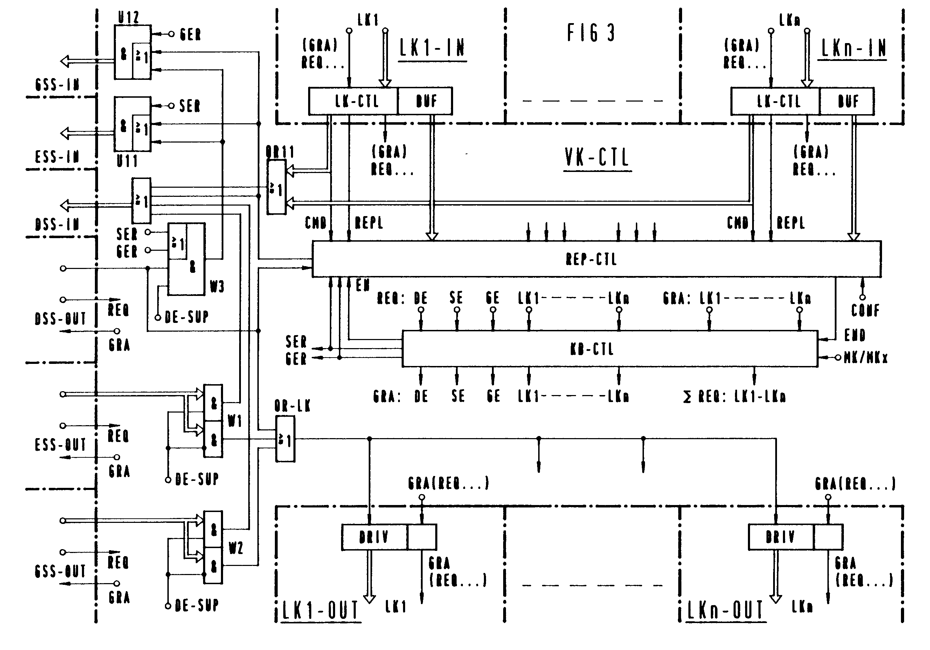

Figur 3 zeigt das Blockschaltbild eines Verbindungsknotens in einem solchen Verbindungsnetzwerk. Im linken Teil der Figur sind die abgehenden und ankommenden Anschlüsse zu den Schnittstellen DSS, ESS und GSS der am Verbindungsknoten angeschlossenen Steuereinheiten DE, SE und GE dargestellt, während der rechte obere Teil ankommend die Schnittstellen LK1-IN bis LKn-IN und der rechte untere Teil abgehend die Schnittstellen LK1-OUT bis LKn-OUT für die einzelnen Verbindungsleitungen LK1 bis LKn mit den anderen Verbindungsknoten des Verbindungsnetzwerkes zeigt.

Die Verbindungsleitungen LK... werden ankommend durch die Leitungssteuerungen LK-CTL in den Schnittstellen LK1-IN bis LKn-IN überwacht, die in bekannter Weise das Eintreffen von Signalen und Informationen überwachen, Anforderungssignale REQ... oder Freigabesignale GRA erkennen und abhängig von den mitgeführten Steuerbits CMD Steuerinformationen sofort weiterleiten, während Antwortinformationen im Speicher BUF gespeichert werden. Die direkt weiterzuleitenden Steuerinformationen werden über ein ODER-Glied OR11 gebündelt und der Schnittstelle DSS-IN für den einzigen Auftragsempfänger DE am Verbindungsknoten zugeleitet, während die Antwortinformationen zunächst in den einzelnen Speichern BUF zwischengespeichert werden. Eine Antwortüberwachungssteuerung REP-CTL überwacht fortlaufend die von den Leitungssteuerungen LK-CTL gelieferten und das Vorliegen einer Antwort kennzeichnenden Signale REPL und veranlaßt die Weiterleitung der jeweiligen Antwort parallel an alle Schnittstellen der am Verbindungsknoten angeschlossenen Steuereinheiten DE, SE und GE. In gleicher Weise überwacht die Antwortüberwachungssteuerung REP-CTL im jeweiligen Masterknoten die eintreffenden Antworten und signalisiert mit dem Signal END der Anforderungs- und Freigabesteuerung KB-CTL das Ende des freigegebenen Informationsaustausches.

In abgehender Richtung bestehen die Schnittstellen LK...-OUT für die einzelnen Verbindungsleitungen LK... lediglich aus Leitungstreibern DRIV, denen die Informationen aller drei abgehenden Schnittstellen DSS-OUT, ESS-OUT und GSS-OUT der Steuereinheiten am Verbindungsknoten, über ein ODER-Glied OR-LK parallel zugeführt werden. Außerdem wird abhängig vom Betrieb als Masterknoten entsprechend MK=1 oder als sonstiger Knoten entsprechend MK=0 entweder ein individuelles Freigabesignal GRA über eine vorgegebene Verbindungsleitung oder aber das Anforderungssignal REQ... parallel über alle Verbindungsleitungen LK... weitergeleitet.

Unterstellt man, daß die weiteren Steuereinheiten SE und GE an einem Verbindsknoten in der Regel mit der Datenverwaltungssteuereinheit DE am eigenen Verbindungsknoten zusammenarbeiten, dann braucht man Steuerinformationen der weiteren Steuereinheiten nicht an die Verbindungsleitungen LK... weiterzuleiten, wenn die Datenverwaltungssteuereinheit am eigenen Verbindungsknoten verfügbar ist. Zu diesem Zweck sind am Ausgang der zugehörigen Schnittstellen Weichen W1 bzw. W2 vorgesehen, die abhängig vom Signal DE-SUP einen Kurzschlußweg zur Datenverwaltungssteuereinheit DE wirksam schalten oder bei nicht verfügbarer Datenverwaltungssteuereinheit die Steuerinformation an die Verbindungsleitungen LK... weiterleiten. Außerdem ist der Ausgang der Schnittstelle DSS-OUT der Datenverwaltungssteuereinheit DE abhängig vom Signal DE-SUP über die Weiche W3 direkt zu den Eingängen der Schnittstellen ESS-IN und GSS-IN der weiteren Steuereinheiten SE und GE durchschaltbar, wenn entsprechend den Signalen SER oder GER ein Auftrag von diesen gestellt wurde und daher zu beantworten ist. Der Vorteil dieser Kurzschlußwege wird später noch erläutert werden.

Kernstück für die Steuerung des Informationsaustausches im Verbindungsnetzwerk VN ist die Anforderungs- und Freigabesteuerung KB-CTL, der im Falle eines Masterknotens alle an den Schnittstellen der Steuereinheiten und der Verbindungsleitungen eintreffenden Anforderungssignale REQ... zugeführt werden und die aufgrund einer ausgewählten Anforderung ein individuelles Freigabesignal GRA zuteilt. Ist der Verbindungsknoten kein Masterknoten, dann werden nur die Anforderungen der Steuereinheiten am eigenen Verbindungsknoten überwacht und eine davon ausgewählte parallel über alle Verbindungsleitungen LK... weitergeleitet. Anschließend wird ein über die Verbindungsleitung vom Masterknoten eintreffendes Freigabesignal GRA an die jeweils zugehörige Schnittstelle DSS-OUT bzw. ESS-OUT bzw. GSS-OUT weitergeleitet, das die Übertragung der in den Bereitstellungsregistern REG1 zwischengespeicherten Steuerinformation veranlaßt.

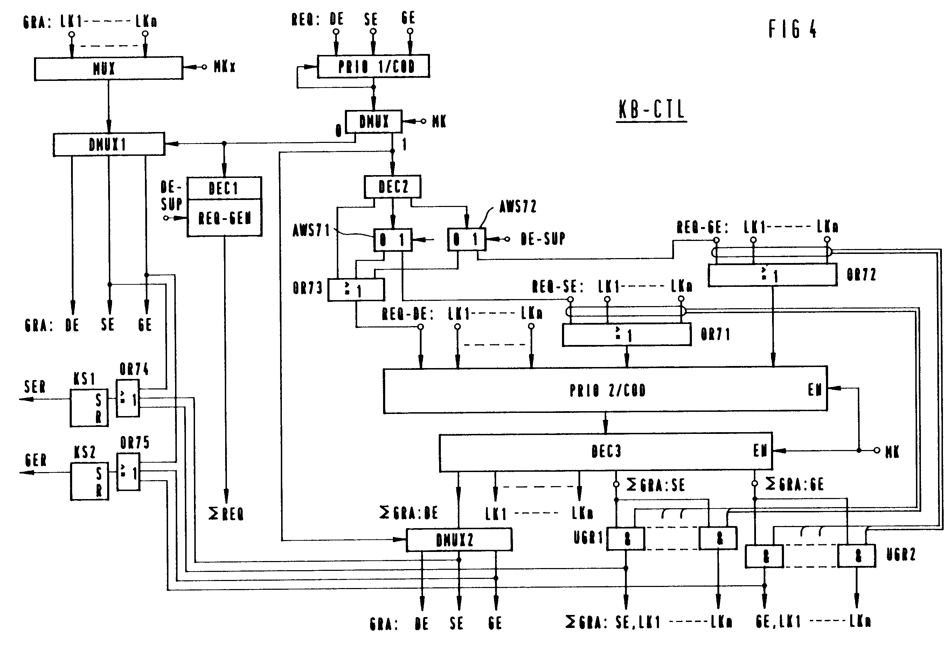

Figur 4 zeigt das Blockschaltbild einer solchen Anforderungs- und Freigabesteuerung KB-CTL. Anforderungen REQ der am Verbindungsknoten angeschlossenen Steuereinheiten DE, SE und GE werden von der Auswahlsteuerung PRIO1/COD entgegengenommen und gespeichert. Jeweils eine der Anforderungen wird ausgewählt und eine entsprechende codierte Kennzeichnung gebildet. Abhängig davon, ob der Verbindungsknoten zugleich als Masterknoten (MK=1) arbeitet oder nicht (MK=0), wird entsprechend dem Signal MK der Auswahlschalter DMUX eingestellt und die gültige Anforderungsinformation an den linken oder rechten Schaltungsteil weitergeleitet.

Im Prinzip würde nach Auswahl einer Anforderung ein vom Typ der zugehörigen Steuereinheit unabhängiges Anforderungssignal für die Weiterleitung an den Masterknoten genügen. Dann könnte aber der Masterknoten die von den einzelnen Verbindungsknoten stammenden Anforderungen nicht entsprechend den unterschiedlichen Steuereinheiten berücksichtigen. Da aber beispielsweise den Datenverwaltungssteuereinheiten ein Vorrang vor den weiteren Steuereinheiten einzuräumen ist, damit für diese immer ein einheitlicher Grunddatenbestand an jedem Verbindungsknoten zur Verfügung steht, wird das durch einen Anforderungsgenerator REQ-GEN an den Masterknoten weiterzuleitende Anforderungssignal entsprechend dem Typ der ausgewählten anfordernden Steuereinheit differenziert. Für die die einzelnen Steuereinheiten kennzeichnenden verschiedenen Anforderungssignale genügt bei einem entsprechenden Signalisierungsverfahren, z.B. Pulslängenmodulation, ebenfalls eine Signalleitung. Ist daher der Verbindungsknoten kein Masterknoten (MK=0), wird mit der vom Ausgang des Auswahlschalters DMUX gelieferten codierten Kennzeichnung der Anforderungsgenerator REQ-GEN über den Decoder DEC1 angesteuert und ein die anfordernde Steuereinheit kennzeichnende Anforderungssignal Σ REQ erzeugt, das dann parallel über alle Verbindungsleitungen LK... weitergeleitet wird.

Über die ankommenden Verbindungsleitungen LK1 bis LKn eines solchen Verbindungsknotens können mit einer Ausnahme sowohl Anforderungs- als auch Freigabesignale eintreffen. Lediglich über die vom Masterknoten kommende Verbindungsleitung kann als einziges Signal ein Freigabesignal GRA eintreffen, da der Masterknoten selbst keine Anforderungssignale aussendet. Entsprechend wird durch den Auswahlschalter MUX abhängig von der Kennzeichnung des zuständigen Masterknotens MKx die zugehörige ankommende Verbindungsleitung LKx ausgewählt und über einen von der Kennzeichnung durch die Auswahlsteuerung PRIO1/COD eingestellten Schalter DEMUX1 das eintreffende Freigabesignal GRA der ausgewählten Steuereinheit am Verbindungsknoten zugeordnet und an die zugehörige Schnittstelle weitergeleitet.

Handelt es sich dagegen entsprechend der Signalisierung MK=1 um einen Masterknoten, dann werden nicht nur die am Verbindungsknoten entstehenden Anforderungen, sondern auch alle über die Verbindungsleitungen LK... eintreffenden Anforderungen Σ REQ entgegengenommen und gespeichert, was nicht gesondert dargestellt ist. Alle Anforderungen werden der Auswahlsteuerung PRIO2/COD zugeführt, wobei eine durch die Kurzschlußwege in den einzelnen Verbindungsknoten mögliche Parallelarbeit der weiteren Steuereinheiten SE bzw. GE berücksichtigt ist und Anforderungen aus diesen beiden Gruppen gruppenweise durch die ODER-Glieder OR71 bzw. OR72 vorher zu je einer Anforderung gebündelt werden. Die Auswahlsteuerung PRIO2/COD wählt wiederum eine der anstehenden Anforderungen aus und ermittelt ein entsprechendes codiertes Kennzeichen, das über den Decodierer DEC3 in individuelle Freigabesignale GRA für die einzelnen Datenverwaltungssteuereinheiten DE und in Gruppenfreigabesignale Σ GRA für die weiteren Steuereinheiten SE bzw. GE umgewandelt wird. Diese Gruppenfreigabesignale Σ GRA werden, gesteuert durch nachgeschaltete UND-Glieder der Gruppen UGR1 bzw. UGR2, jeweils nur an die Steuereinheiten oder Verbindungsleitungen weitergeleitet, für die Anforderungen REQ vorliegen.

In analoger Weise könnten auch alle weiteren Steuereinheiten SE und GE zu einer einzigen statt zu zwei Gruppen zusammengefaßt werden, wobei die jeweils lokale Auswahlsteuerung PRIO1/COD an den einzelnen Verbindungsknoten entscheidet, welcher lokalen Einheit SE oder GE das über den Auswahlschalter MUX eintreffende Freigabesignal GRA durch den Auswahlschalter DMUX1 zuzuordnen ist.

Da nicht immer vorausgesetzt werden kann, daß für die weiteren Steuereinheiten SE und GE die Datenverwaltungssteuereinheit DE am eigenen Verbindungsknoten verfügbar ist, und daher eine Datenverwaltungssteuereinheit an einem anderen Verbindungsknoten angesteuert werden muß, ist in diesem Falle keine Parallelarbeit mit anderen Einheiten derselben Gruppe möglich. Die Anforderung dieser Steuereinheiten werden dann als DE-Anforderungen behandelt und als solche gekennzeichnet. Ist der Verbindungsknoten kein Masterknoten, steuert das Signal DE-SUP=0 den Anforderungsgenerator REQ-GEN entsprechend. Im Masterknoten wird daher eine solche über eine Verbindungsleitung eintreffende Anforderung als DE-Anforderung eingeordnet und individuell behandelt. Andererseits wird das entsprechende Freigabesignal GRA im anfordernden Verbindungsknoten durch den Schalter DEMUX1 wieder der richtigen Steuereinheit zugeordnet.

Im Masterknoten entstehende Anforderungen werden dagegen über den Auswahlschalter DMUX einem Decoder DEC2 zugeführt, damit eine entsprechende Zuordnung zu den einzelnen Gruppen von Anforderungen möglich ist. Die individuellen Ausgänge für die weiteren Steuereinheiten SE und GE werden dabei über vom Signal DE-SUP einstellbare Schalter AWS71 bzw. AWS72 entweder dem jeweiligen ODER-Glied OR71 bzw. OR72 der jeweiligen Gruppe oder über das ODER-Glied OR73 der DE-Gruppe zugeordnet. Wählt nachfolgend die Auswahlsteuerung PRIO2/COD die DE-Anforderung vom eigenen Verbindungsknoten aus, wird das entsprechende Freigabesignal Σ GRA:DE durch den nachgeschalteten Schalter DEMUX2 analog dem Schalter DEMUX1 abhängig vom entsprechenden Kennzeichen am Ausgang des Auswahlschalters DMUX der jeweils betroffenen Steuereinheit zugeordnet, wobei die einander entsprechenden Signalausgänge für die einzelnen Steuereinheiten DE bzw. SE bzw. GE jeweils über ein nicht dargestelltes ODER-Glied zusammengefaßt werden.

Damit bei einer Parallelarbeit der beiden Gruppen von Steuereinheiten SE bzw. GE sichergestellt werden kann, daß die Antworten jeweils der Steuereinheit der freigegebenen Gruppe zugeordnet werden, wird von allen Freigabesignalen GRA für die Einheiten SE bzw. GE jeweils über ein ODER-Glied OR74 bzw. OR75 eine gruppenindividuelle Kippstufe KS1 bzw. KS2 gesetzt, deren Ausgangssignale SER bzw. GER jeweils den Eingängen der zugehörigen Schnittstellen vorgeschaltete UND-Glieder U11 bzw. U12 steuern und jeweils die Weiche W3 am Ausgang der Schnittstelle DSS-OUT der Datenverwaltungssteuereinheit DE auf den Kurzschlußweg umschalten (Figur 3).

In der Regel erfolgt der Informationsaustausch immer zwischen zwei Steuereinheiten, so daß von den Antwortüberwachungssteuerungen REP-CTL das Eintreffen nur einer Antwortinformation von einem der Verbindungsknoten zu überwachen ist. Das gilt insbesondere bei von den weiteren Steuereinheiten SE und GE ausgehenden Steuerinformationen, die sich in der Regel an eine der Datenverwaltungssteuereinheiten DE richten. Anders verhält es sich dagegen bei von den Datenverwaltungssteuereinheiten DE ausgehenden Steuerinformationen im Rahmen der Datenverwaltung. Diese können sich einerseits gezielt an nur eine andere Datenverwaltungssteuereinheit richten, um beispielsweise zu den dortigen Dateneinträgen vorliegende Steuerinformationen abzurufen, oder aber gleichzeitig an alle Datenverwaltungssteuereinheiten, um beispielsweise korrespondierende Dateneinträge in gleicher Weise zu ändern.

Die von den einzelnen Steuereinheiten ausgehenden Steuerinformationen können daher nur eine Antwortinformation von einem der Vermittlungsknoten oder mehrere Antwortinformationen zur Folge haben. Um sicherzustellen, daß die Antwortüberwachungssteuerungen REP-CTL sowohl im Masterknoten als auch in dem Verbindungsknoten, der das Freigabesignal erhalten hat, erst tätig werden, wenn tatsächlich alle benötigten Antworten eingetroffen sind, müssen diese darüber informiert sein, ob nur eine Antwort oder mehrere und dann wieviele Antworten benötigt werden. Ob nur eine Antwort benötigt wird, ist im vorliegendem Fall u.a. anhand der von den Kippstufen KS1 und KS2 gelieferten Signale SER oder GER erkennbar, wenn es sich um Anforderungen von den weiteren Steuereinheiten SE oder GE an einem der Verbindungsknoten handelt. Bei Anforderungen der Datenverwaltungssteuereinheiten DE gibt darüber beispielsweise die in der Steuerinformation mitgeführte Steuerbitkombination CMD Auskunft, während durch eine über die gültige Systemkonfiguration Aufschluß gebende Konfigurationsinformation CONF festlegt, von welchen Verbindungsknoten Antworten bei mehreren zu erwartenden Antworten eintreffen müssen. Alle diese Informationen werden daher den Antwortüberwachungssteuerungen REP-CTL in Figur 3 gleichfalls zugeführt. Eine entsprechend den jeweils gegebenen Randbedingungen arbeitende Schalterkombination überwacht daher die bei Eintreffen einer Antwortinformation von der jeweiligen Leitungssteuerung LK-CTL erzeugten Antwortsignale REPL.

Liegen alle benötigten Antworten vor, wird im Masterknoten das Endesignal END ausgelöst und in dem Verbindungsknoten, der ein Freigabesignal erhalten hat, ist eine Antwort an die angeschlossene zuständige Steuereinheit weiterzuleiten, wobei vorher bei mehreren Antworten zunächst eine gemeinsame Antwort zu bilden ist. Dies kann in der Weise geschehen, daß korrespondierende Datenbits einfach geodert werden.

Zum Abschluß eines Informationsaustausches erhält die anfordernde Steuereinheit mit der Antwortinformation immer auch eine Quittung als Anzeige, ob eine Steuerinformation fehlerfrei bearbeitet worden ist oder nicht. Eine zusätzliche Kontrolle des von einer Datenverwaltungssteuereinheit ausgehenden Informationsaustausches läßt sich bei Steuerinformationen, die eine Bearbeitung durch alle Datenverwaltungssteuereinheiten DE zur Folge haben, dadurch erreichen, daß die Bearbeitung durch die anfordernde Datenverwaltungssteuereinheit DE zumindest verzögert wird, indem die auftraggebende Steuereinheit die eigene Steuerinformation über die Eingangsschnittstelle DSS-IN parallel zur Aussendung über die Verbindungsleitungen LK... zur Bearbeitung zugestellt erhält. Diese Rückkopplung ist gleichzeitig eine Quittung dafür, daß die Anforderung über das Verbindungsnetzwerk ordnungsgemäß weitergeleitet worden ist und bearbeitet wird. Ebenso erleichtert die anschließende Übergabe der zugehörigen Antwortinformation an den Verbindungsknoten neben der Endesteuerung die Bildung der gemeinsamen Antwort durch die Antwortüberwachungssteuerung REP-CTL.

Ob eine Antwortüberwachungssteuerung REP-CTL für die Weiterleitung einer Antwort zuständig ist, wird ihr durch ein Signal EN der Anforderungs- und Freigabesteuerung KB-CTL am Verbindungknoten mitgeteilt. Dieses Signal kann in einfacher Weise durch eine nicht dargestellte Kippstufe erzeugt werden, der die Freigabesignale für alle am Verbindungsknoten angeschlossenen Steuereinheiten DE, SE und GE als Setzsignale zugeführt werden.

Die für die Steuerung des Informationsaustausches in den Verbindungsknoten und den Schnittstellen benötigten Identitätskennzeichen, oder Zuordnungskennzeichen, um von einer Steuereinheit stammende Steuer- oder Antwortinformationen an die jeweils zuständige Steuereinheit weiterleiten zu können, sowie die übrigen Konfigurationsinformationen und die Kennzeichnung des Masterknotens können in an sich bekannter Weise durch eine übergeordnete Steuerung, z.B. durch einen Serviceprozessor, vorgegeben und in entsprechenden Registern abgespeichert werden.

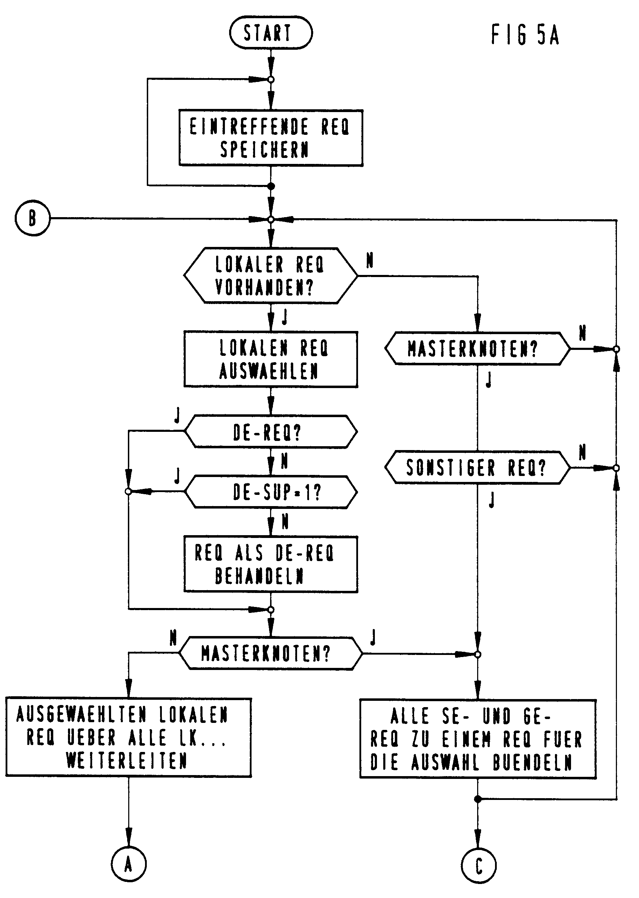

Figur 5A bis 5C geben in Form eines Flußdiagramms den Steuerungsablauf innerhalb eines Verbindungsknotens wieder. In jedem Verbindungsknoten werden gemäß Figur 5A zunächst die eintreffenden Anforderungen REQ gespeichert. Liegt eine lokale Anforderung vor, wird zunächst eine davon ausgewählt und im Falle einer Anforderung von einer der weiteren Steuereinheiten SE oder GE geprüft, ob diese Anforderung als DE-Anforderung zu behandeln ist. Danach wird die ausgewählte Anforderung bei einem fremden Masterknoten parallel über alle abgehenden Verbindungsleitungen LK... weitergeleitet und auf das Eintreffen des Freigabesignals GRA gewartet.

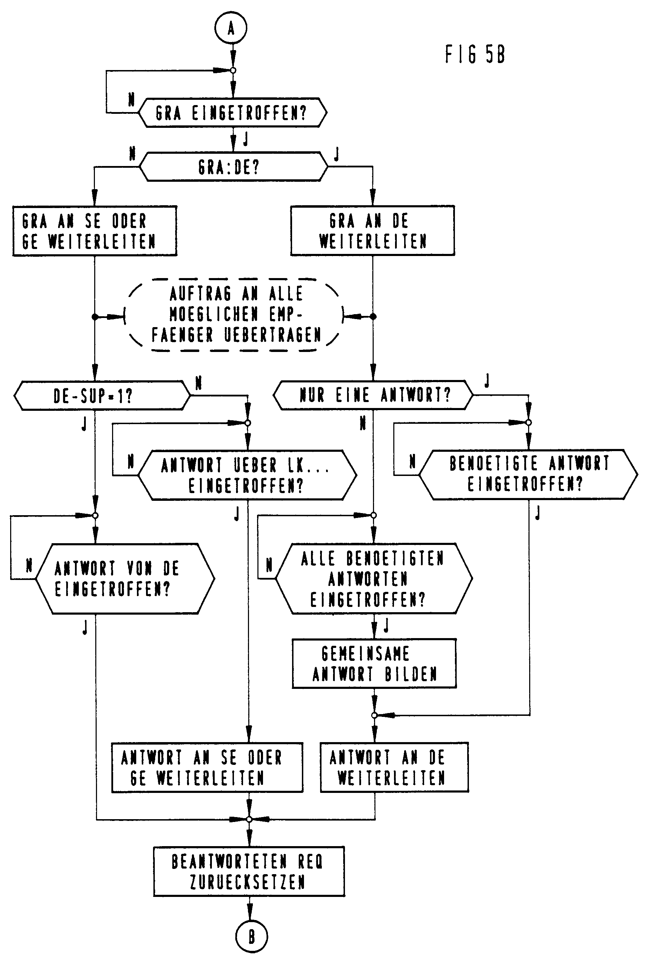

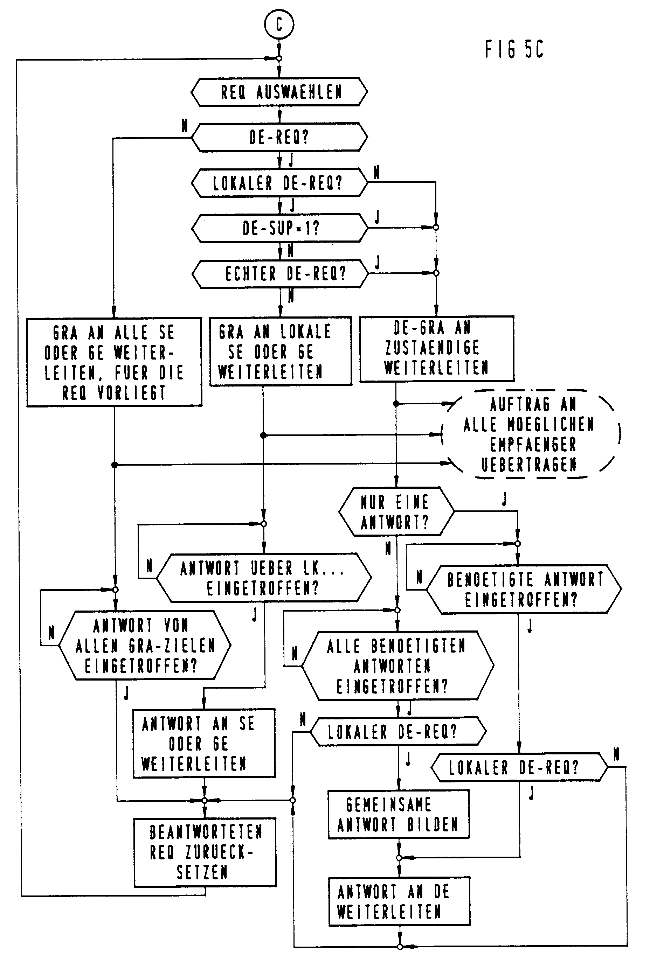

Sobald das Freigabesignal GRA vom Masterknoten eingetroffen ist, wird es gemäß Figur 5B an die anfordernde Steuereinheit weitergeleitet, die daraufhin die Steuerinformation an alle möglichen Empfänger aussendet und auf Antwort wartet. Bei einer Anforderung von einer der weiteren Steuereinheiten SE oder GE und verfügbarer Datenverwaltungssteuereinheit DE am eigenen Verbindungsknoten erfolgt der Informationsaustausch über den Kurzschlußweg und es ist nur die Antwort von der angeschlossenen Datenverwaltungssteuereinheit DE als einzige Antwort zu berücksichtigen, die unmittelbar ohne Einschaltung der Antwortüberwachungssteuerung REP-CTL für die Weiterleitung übertragen wird. Ist dagegen der Grunddatenbestand am eigenen Knoten nicht verfügbar, dann erfolgt der Informationsaustausch über das Verbindungsnetzwerk mit einer vorgegebenen anderen Datenverwaltungssteuereinheit, wobei ebenfalls nur eine einzige Antwort über eine der Verbindungsleitungen zu erwarten ist, die von der Antwortüberwachungssteuerung REP-CTL an die anfordernde Steuereinheit weiterzuleiten ist. Handelt es sich dagegen um eine DE-Anforderung, dann ist abhängig von der jeweiligen Steuerfunktion entweder nur eine einzige Antwort zu erwarten oder es muß auf Antworten von allen verfügbaren Datenverwaltungssteuereinheiten des Systems gewartet und aus allen Antworten eine gemeinsame Antwort gebildet werden. Die jeweilige Antwort wird dann an die zuständige Datenverwaltungssteuereinheit DE weitergeleitet. Mit Ende des jeweiligen Informationsaustausches wird in allen Fällen gemäß Figur 5B die beantwortete Anforderung zurückgesetzt und die Steuerung mit Überleitung zu Figur 5A für die Bearbeitung einer weiteren Anforderung freigegeben.

Wird bei der Prüfung auf Vorliegen einer lokalen Anforderung gemäß Figur 5A keine Anforderung ermittelt, und handelt es sich nicht um einen Masterknoten oder liegt im Falle eines Masterknotens keine weitere Anforderung vor, dann wird die Schleife im rechten oberen Teil von Figur 5A fortlaufend wirksam, bis eine Anforderung ermittelt wird, wobei im Falle eines Masterknotens alle SE- und GE-Anforderungen in der bereits beschriebenen Weise gebündelt werden. Danach wird die Prüfung auf Vorliegen einer Anforderung erneut begonnen und gleichzeitig in den Steuerungsablauf gemäß Figur 5C übergeleitet, der sich im Gegensatz zu dem von Figur 5B auf die Auswahlsteuerung im Masterknoten bezieht.

In der anhand von Figur 4 bereits beschriebenen Weise wird von den aus allen Verbindungsknoten vorliegenden Anforderungen eine ausgewählt und abhängig vom Typ der zugehörigen Steuereinheit ein Freigabesignal GRA entweder gemäß dem linken Flußlaufpfad an alle weiteren Steuereinheiten einer Gruppe SE bzw. GE, für die eine Anforderung vorliegt, oder bei einer DE-Anforderung gemäß dem rechten Flußlaufpfad an die zuständige Datenverwaltungssteuereinheit DE weitergeleitet, während im Falle einer als DE-Anforderung zu behandelnden Anforderung einer der weiteren Steuereinheiten SE oder GE am eigenen Verbindungsknoten gemäß dem mittleren Flußlaufpfad das Freigabesignal nur an diese übertragen wird. Die das Freigabeisignal GRA erhaltenden Steuereinheiten übertragen dann die Steuerinformation an alle möglichen Empfänger und warten auf deren Antwort.

Da die Antworten an alle Verbindungsknoten ausgesendet werden, erhält auch der Masterknoten alle Antworten, selbst wenn die Anforderung nicht von einer an ihn angeschlossenen Steuereinheit ausgegangen ist. Der weitere Steuerungsablauf im Masterknoten ähnelt daher dem bereits anhand von Figur 5B beschriebenen Steuerungsablauf bei einer von einem fremden Verbindungsknoten ausgehenden Anforderung. Im Falle von Antworten für weitere Steuereinheiten sind es die Antworten von allen Verbindungsknoten, die parallel für die Bearbeitung von SE- oder GE-Aufträgen freigegeben wurden, oder es handelt sich um nur eine einzige Antwort von einem anderen Verbindungsknoten für die lokale weitere Steuereinheit SE oder GE, wenn der Grunddatenbestand am Masterknoten nicht verfügbar ist. Im letzteren Falle ist zum Abschluß des Informationsaustausches die eingetroffene Antwort an die zuständige Einheit am Masterknoten weiterzuleiten. Beruht dagegen der Informationsaustausch gemäß dem rechten Flußlaufpfad von Figur 5C auf einem Freigabesignal für eine Datenverwaltungssteuereinheit DE, dann kann am Masterknoten erst anhand der mit der Steuerinformation verbundenen Steuerfunktion entschieden werden, ob das Freigabesignal auf eine echte DE-Anforderung oder nur auf eine als solche behandelte Anforderung einer weiteren Steuereinheit zurückgeht, bei der nur eine Antwort zu erwarten ist. Im Masterknoten werden daher auch die Steuerbits der einlaufenden Steuerinformationen überwacht und davon abhängig die Entscheidung getroffen, ob nur eine Antwort oder mehrere Antworten zu erwarten sind. Sind die benötigten Antworten eingetroffen und handelt es sich um eine lokale DE-Anforderung am Masterknoten, dann ist eine Antwort an diese weiterzuleiten, die bei mehreren Antworten aus der gebildeten gemeinsamen Antwort besteht. Handelt es sich dagegen nicht um eine lokale DE-Anforderung, dann dienen die Antworten lediglich dazu, das Ende des freigegebenen Informationsaustausches zu erkennen, damit der Masterknoten die beantwortete Anforderung zurücksetzen und eine neue auswählen kann.

Abweichend von dem anhand von Figur 5 beschriebenen Steuerungsablauf ist eine Variante auch in der Weise möglich, daß der Masterknoten an eine der Gruppen von weiteren Steuereinheiten SE oder GE immer dann ein Freigabesignal Σ GRA liefert, wenn keine Anforderung vorliegt. Solange ein solches Freigabesignal wirksam ist, brauchen daher nur Anforderungen der davon nicht betroffenen Steuereinheiten an die Mastersteuerung weitergeleitet zu werden. Im übrigen entspricht der Steuerungsablauf dem bereits erläuterten.

## Patentansprüche

1. Verbindungsnetzwerk mit einer Reihe von Verbindungsknoten (VK...), an die jeweils eine Datenverwaltungssteuereinheit (DE) und weitere mit den Datenverwaltungssteuereinheiten zusammenarbeitende Steuereinheiten (z.B. SE, GE) angeschlossen sind, wobei alle Datenverwaltungssteuereinheiten (DE) einen einheitlichen Grunddatenbestand aufweisen,
**dadurch gekennzeichnet,**
- daß jeder Verbindungsknoten (VK...) über eine bidirektionale Verbindungsleitung (LK...) mit jedem anderen Verbindungsknoten (VK...) verbunden ist,
- daß ein frei wählbarer Verbindungsknoten (VK...) jeweils als Masterknoten (MK=1) den Informationsaustausch zwischen den Steuereinheiten netzübergreifend steuert,
- daß von den an einem Verbindungsknoten (VK...) entstehenden Anforderungen (REQ) der angeschlossenen Steuereinheiten (DE, SE, GE) zum Informationsaustausch jeweils eine ausgewählt und an alle anderen Verbindungsknoten (VK...) weitergeleitet wird, wenn der eigene Verbindungsknoten nicht der Masterknoten ist,
- daß der Masterknoten das Vorliegen von Anforderungen (REQ) fortlaufend überprüft, jeweils eine davon auswählt und an den die ausgewählte Anforderung stellenden Verbindungsknoten (VK...) ein die Berechtigung zum Informationsaustausch erteilendes Freigabesignal (GRA) aussendet, das im jeweiligen Verbindungsknoten (VK...) an die die ausgewählte Anforderung stellende Steuereinheit (DE bzw. SE bzw. GE) weitergeleitet wird,
- daß die von der zum Informationsaustausch berechtigten Steuereinheit (z.B. DE) ausgesandte Steuerinformation jeweils an alle Verbindungsknoten (VK...) übertragen wird,
- daß die für die Bearbeitung zuständigen Datenverwaltungseinheiten (DE...) jeweils mit einer Antwortinformation antworten, die ebenfalls an alle Verbindungsknoten (VK...) weitergeleitet wird, so daß jeweils auch der Masterknoten die Antwortinformation erhält und daher das Ende des Informationsaustausches erkennt.

2. Verbindungsnetzwerk nach Anspruch 1,
**dadurch gekennzeichnet,**
daß bei von den weiteren Steuereinheiten (SE, GE) an einem Verbindungsknoten (VK...) ausgehenden Anforderungen (REQ) bei Verfügbarkeit der Datenverwaltungssteuereinheit (DE) am eigenen Verbindungsknoten (VK...) die Steuerinformation und die Antwortinformation nach Vorliegen des Freigabesignals (GRA) durch den Masterknoten am Verbindungsnetzwerk (VN) vorbei über einen Kurzschlußweg im Verbindungsknoten (VK...) geleitet und nur die Antwortinformation über das Verbindungsnetzwerk zum Masterknoten ausgesendet wird, während bei nicht verfügbarer Datenverwaltungssteuereinheit (DE) die Steuerinformation über das Verbindungsnetzwerk (VN) ausgesendet wird und von einer vorgegebenen Datenverwaltungssteuereinheit (DE) an einem anderen Verbindungsknoten (VK...) beantwortet wird.

3. Verbindungsnetzwerk nach Anspruch 2,
**dadurch gekennzeichnet,**
daß bei Verwendung nur jeweils einer weiteren Steuereinheit (SE, GE) gleichen Typs (S bzw. G) an jedem Verbindungsknoten (VK...) die Anforderungen (REQ) von Steuereinheiten (z.B. SE) jeweils gleichen Typs (z.B. S) im Masterknoten gruppenweise gebündelt und jeweils als eine Anforderung behandelt werden und
daß bei Auswahl einer solchen gebündelten Anforderung (Σ REQ) ein Freigabesignal (Σ GRA) parallel an alle Steuereinheiten (z.B. SE) der zugehörigen Gruppe (S) weitergeleitet wird, für die eine Anforderung vorliegt, so daß in allen betroffenen Verbindungsknoten (VK...) der Informationsaustausch über den Kurzschlußweg gleichzeitig ausgeführt werden kann.

4. Verbindungsnetzwerk nach Anspruch 3,
**dadurch gekennzeichnet,**
daß bei Verwendung nur jeweils einer weiteren Steuereinheit (SE, GE) gleichen Typs (S bzw. G) an jedem Verbindungsknoten (VK...) der Masterknoten, solange keine Anforderung vorliegt, ein Freigabesignal (Σ GRA) parallel an alle Verbindungsknoten (VK...) sendet, so daß die weiteren Steuereinheiten (z.B. SE) des einheitlichen oder eines vorgegebenen Typs (z.B. S) bei Bedarf einen Informationsaustausch über den vorhandenen Kurzschlußweg unmittelbar vornehmen können.

5. Verbindungsnetzwerk nach Anspruch 3 oder 4,
**dadurch gekennzeichnet,**
daß bei nicht verfügbarer Datenverwaltungssteuereinheit (DE) an einem Verbindungsknoten (VK...) eine von einer weiteren Steuereinheit (z.B. SE) stammende Anforderung (REQ) wie eine Anforderung einer Datenverwaltungssteuereinheit (DE) behandelt wird und daß ein daraufhin vom Masterknoten ausgehendes Freigabesignal (GRA) im jeweils anfordernden Verbindungsknoten (VK...) in ein Freigabesignal (GRA) für die jeweils betroffene weitere Steuereinheit (SE) umgewandelt wird.

6. Verbindungsnetzwerk nach einem der Ansprüche 1 bis 5,
**dadurch gekennzeichnet,**
daß bei von einer Datenverwaltungssteuereinheit (z.B. DE1) ausgesandten Steuerinformationen, die die Verwaltung des Grunddatenbestandes aller Datenverwaltungssteuereinheiten (DE...) betreffen, die Antwortinformationen aller Datenverwaltungssteuereinheiten (DE...) abgewartet werden und daraus am Verbindungsknoten (VK...) der auf die Antwortinformation wartenden Datenverwaltungssteuereinheit (DE1) erst eine gemeinsame Antwort gebildet wird, die dann an die wartende Datenverwaltungssteuereinheit (DE1) weitergeleitet wird.

7. Verbindungsnetzwerk nach Anspruch 6,
**dadurch gekennzeichnet,**
daß eine von einer Datenverwaltungssteuereinheit (z.B.. DE1) ausgesandte Steuerinformation, die eine Bearbeitung durch alle Datenverwaltungssteuereinheiten (DE...) zur Folge hat, der eigenen Datenverwaltungssteuereinheit (DE1) ebenfalls erst parallel zur Aussendung über die Verbindungsleitungen (LK...) zur Bearbeitung vom eigenen Verbindungsknoten übergeben wird und daß die zugehörige Antwortinformation ebenfalls erst an das Verbindungsnetzwerk (VN) weitergeleitet wird, bevor die eigentliche Antwortinformation als Quittung empfangen werden kann.

8. Verbindungsnetzwerk nach einem der Ansprüche 1 bis 7,
**dadurch gekennzeichnet,**
daß in jedem Verbindungsknoten (VK...) die Anschlußschnittstellen (DSS) der Datenverwaltungssteuereinheiten (DE...) sowohl ankommend als auch abgehend mit Pufferspeichern (REG2, REG1) für die Steuerinformation und die Antwortinformation und die Anschlußschnittstellen (ESS, GSS) der weiteren Steuereinheiten (DE, GE) abgehend nur mit Pufferspeichern für die Steuerinformation und ankommend nur mit Pufferspeichern für die Antwortinformation versehen sind, während die Anschlußschnittstellen (LK...-IN) für die Verbindungsleitungen (LK...) lediglich ankommend mit Pufferspeichern (BUF) für Antwortinformationen versehen sind, so daß Steuerinformationen ohne weitere Zwischenspeicherung vom Pufferspeicher (REG1) an einer Anschlußschnittstelle (DSS, ESS, GSS) direkt oder über die Verbindungsleitungen (LK...) des Verbindungsnetzwerkes (VN) zum bzw. den Pufferspeichern (REG2) an anderen Schnittstellen (DSS) übertragen werden können, während Antwortinformationen am anderen Ende der Verbindungsleitungen (LK...) im dortigen Pufferspeicher (BUF) zunächst zwischengespeichert werden,
- daß allen abgehend betriebenen Pufferspeichern (REG1) an den Anschlußschnittstellen (DSS, ESS, GSS) eines Verbindungskrotens (VK...) jeweils eine Steuerschaltung (TRA-CTL) zugeordnet ist, die das Bereitstellen von Informationen durch die angeschlossenen Steuereinheiten (DE, SE, GE) überwachen, bei Vorliegen einer Steuerinformation ein Anforderungssignal (REQ) erzeugen und nach Eintreffen des Freigabesignals (GRA) die Steuerinformation weiterleiten, dagegen bei Vorliegen einer Antwortinformation diese unmittelbar weiterleiten, und
- daß allen in einem Verbindungsknoten (VK...) ankommenden Verbindungsleitungen (LK...) ebenfalls eine Steuerschaltung (LK-CTL) zugeordnet ist, die im Falle des Masterknotens das Eintreffen von Anforderungssignalen (REQ) und im anderen Falle das Eintreffen von Freigabesignalen (GRA) sowie das Eintreffen von Steuer- oder Antwortinformationen überwacht, wobei Steuerinformationen unmittelbar an den ankommend betriebenen Pufferspeicher (REG2) an der Schnittstelle (DSS) für die Datenverwaltungssteuereinheit (DE...) weitergeleitet werden, während Antwortinformationen im vorgesehenen Pufferspeicher (BUF) zwischengespeichert werden.

9. Verbindungsnetzwerk nach Anspruch 8,
**dadurch gekennzeichnet,**
- daß in jedem Verbindungsknoten (VK...) eine erste Prioritätssteuerschaltung (PRIO1/COD) vorgesehen ist, die die von den Steuereinheiten (DE, SE, GE) am Verbindungsknoten ausgehenden Anforderungssignale (REQ) speichert und die jeweils bevorrechtigte Anforderung ermittelt,
- daß die ermittelte Anforderung, wenn der Verbindungsknoten nicht der Masterknoten ist, über alle abgehenden Verbindungsleitungen (LK...) weitergeleitet wird, und
- daß ein daraufhin über eine der Verbindungsleitungen ankommendes Freigabesignal (GRA) abhängig von der vorher ausgewählten Anforderung unmittelbar an die Anschlußschnittstelle (z.B. DSS) der zuständigen Steuereinheit (z.B. DE) weitergeleitet wird,
- daß in jedem Verbindungsknoten (VK...) eine zweite Prioritätssteuerschaltung (PRIO2/COD) vorgesehen ist, die im Falle, daß der Verbindungsknoten ein Masterknoten (MK=1) ist, wirksamgeschaltet wird und der sowohl die von der ersten Prioritätssteuerschaltung (PRIO1/COD) ausgewählte Anforderung als auch die über die Verbindungsleitungen (LK...) eintreffenden Anforderungssignale (REQ) zur Abspeicherung und zur Ermittlung einer bevorrechtigten Anforderung zugeführt werden, und
- daß ein der ermittelten Anforderung entsprechendes Freigabesignal (GRA) erzeugt und an die anfordernde Anschlußschnittstelle (z.B. DSS) am Verbindungsknoten oder über die entsprechende Verbindungsleitung (LK...) weitergeleitet wird.

10. Verbindungsnetzwerk nach Anspruch 9,
**dadurch gekennzeichnet,**
daß für die Verbindungsleitungen (LK...) in ankommender und abgehender Richtung neben den Datenleitungen jeweils nur eine Signalleitung zur Übertragung des Anforderungssignales (REQ) bzw. des Freigabesignales (GRA) vorgesehen ist und daß für die Unterscheidung der anfordernden Steuereinheiten (DE, SE, GE) am Masterknoten die über die Verbindungsleitungen (LK...) weitergeleiteten Anforderungssignale (REQ) entsprechend unterschiedlich gestaltet sind.

11. Verbindungsnetzwerk nach Anspruch 10 in Verbindung mit Anspruch 5,
**dadurch gekennzeichnet,**
daß ein nach Auswahl einer von einer der weiteren Steuereinheiten (SE bzw. GE) stammenden und wie eine Anforderung einer Datenverwaltungssteuereinheit (DE) behandelten Anforderung (REQ) wirksam werdendes Freigabesignal (GRA) am Ort des anfordernden Verbindungsknotens abhängig von der Auswahlstellung der ersten Prioritätssteuerschaltung (PRIO1/COD) in ein Freigabesignal für die betroffene Steuereinheit (SE bzw. GE) umgewandelt wird.

12. Verbindungsnetzwerk nach einem der Ansprüche 1 bis 11,
**dadurch gekennzeichnet,**
- daß in jedem Verbindungsknoten eine Antwortüberwachungssteuerung (REP-CTL) vorgesehen ist, die mit den Pufferspeichern (BUF) für die Antwortinformationen aller ankommenden Verbindungsleitungen (LK...) und der Schnittstelle (DSS) für die Datenverwaltungssteuereinheit (DE) gekoppelt ist, die das Eintreffen der Antwortinformation überwacht und
- daß nach Vorliegen der Antwortinformation die Antwortüberwachungssteuerung (REP-CTL) im anfordernden Verbindungsknoten (VK...) die Antwort an die Schnittstellen (DSS, ESS, GSS) für die Steuereinheiten am eigenen Verbindungsknoten weiterleitet und in der ersten Prioritätssteuerschaltung (PRIO/COD) die Speicherung der beantworteten Anforderung und damit die Sperre für die Auswahl einer weiteren Anforderung wieder aufhebt, während die im Masterknoten die Speicherung der beantworteten Anforderung und die Sperre für die zweite Prioritätssteuerschaltung (PRIO2/COD) wieder aufhebt.

13. Verbindungsnetzwerk nach Anspruch 12 in Verbindung mit Anspruch 6,
**dadurch gekennzeichnet,**
daß bei Steuerinformationen, die eine Antwortinformation von allen verfügbaren Datenverwaltungssteuereinheiten (DE...) zur Folge haben, die Antwortüberwachungssteuerung (REP-CTL) im Falle eines Masterknotens (MK=1) alle vom Verbindungsknoten ausgehenden und über die Verbindungsleitungen (LK...) eintreffenden Auftragsinformationen und im anderen Falle nur die vom eigenen Verbindungsknoten ausgehenden Auftragsinformationen überwacht und abhängig von der Art des jeweiligen Auftrages (CMD) und der jeweiligen Systemkonfiguration (CONF) die Quellen der zu erwartenden Antworten ermittelt und daß erst nach Vorliegen der Antworten von allen ermittelten Quellen die die Speicherung der beantworteten Anforderung jeweils wieder aufgehoben wird.
